(19) Europäisches Patentamt
European Patent Office
Office européen des brevets

(11) EP 3 922 678 B1

(12) **EUROPEAN PATENT SPECIFICATION**

(45) Date of publication and mention of the grant of the patent:
**01.05.2024 Bulletin 2024/18**

(21) Application number: **21170999.3**

(22) Date of filing: **28.04.2021**

(51) International Patent Classification (IPC):
***C08L 71/12*** *(2006.01)*

(52) Cooperative Patent Classification (CPC):
(C-Sets available)
**C08L 71/12** (Cont.)

(54) **RESIN COMPOSITION**

HARZZUSAMMENSETZUNG

COMPOSITION DE RÉSINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.06.2020 JP 2020097736**

(43) Date of publication of application:
**15.12.2021 Bulletin 2021/50**

(73) Proprietor: **Asahi Kasei Kabushiki Kaisha**
**Tokyo 1000006 (JP)**

(72) Inventor: **Yoshida, Koichiro**
**Tokyo, 100-0006 (JP)**

(74) Representative: **Strehl Schübel-Hopf & Partner**
**Maximilianstrasse 54**
**80538 München (DE)**

(56) References cited:
**EP-A1- 2 677 552**
**EP-A1- 3 088 469**
**JP-A- 2017 110 072**

EP 3 922 678 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 71/12, C08K 5/523, C08K 5/5313, C08L 23/00, C08L 25/06, C08L 53/025;**
**C08L 71/12, C08K 5/523, C08K 5/5313, C08L 25/06;**
**C08L 71/12, C08K 5/523, C08K 5/5313, C08L 25/06, C08L 53/025**

## Description

TECHNICAL FIELD

The present disclosure relates to a resin composition.

BACKGROUND

Polyphenylene ether (PPE) resins have excellent electrical insulation while also having heat resistance, hydrolysis resistance, and flame retardance, and thus are widely used in electrical/electronic components for secondary batteries, photovoltaics, and the like, as well as for home appliances, OA equipment, and so forth. For example, Patent Literature (PTL) 1 discloses a flame-retardant resin composition that can effectively inhibit reduction of flame retardance even upon exposure to a high-temperature environment for a long period as a connecting structure for a photovoltaic module.

On the other hand, typical polyphenylene ether resin compositions do not have sufficient resistance to chemicals and frequently suffer from a problem of cracking and fracturing upon coming into contact with rust inhibitors attached to molds of molding machines, lubricants of components for various applications, and so forth.

In recent years, there has been strengthening demand for reduction of thickness and size of connecting structures for photovoltaic modules due to demand for better aesthetic design and space saving. Since flame retardance generally decreases with decreasing thickness, a high level of flame retardance is required.

It is known that a polyphenylene ether resin can be made more flame retardant by, for example, compounding a specific nitrogen compound and an organophosphoric acid ester, a phosphinic acid salt, diphosphinic acid salt, and/or condensate thereof as a flame retardant as disclosed in PTL 1.

CITATION LIST

Patent Literature

PTL 1: JP 6328664 B

SUMMARY

However, it is necessary to increase the amount of a flame retardant that is compounded in order to obtain a high level of flame retardance, and this increase in the amount of the flame retardant is accompanied by reduction of chemical resistance and molding fluidity. Therefore, a resin composition that has excellent chemical resistance and molding fluidity even when it is provided with a high level of flame retardance has not yet been achieved. Even the resin composition of PTL 1 does not have sufficient flame retardance, and no disclosure is made in relation to chemical resistance and molding fluidity in a situation in which the resin composition does have a high level of flame retardance.

Accordingly, an object of the present disclosure is to provide a resin composition that has a balance of a high level of flame retardance and excellent chemical resistance while also having good molding fluidity in practical use.

As a result of diligent studies aimed at solving the problem set forth above, the inventor discovered that this problem can be advantageously solved by, with respect to a resin composition that contains (a) a polyphenylene ether resin or a mixed resin of a polyphenylene ether resin and a styrene resin, (b) a hydrogenated block copolymer, (c) a phosphoric acid ester compound, and (d) a phosphinic acid salt, setting the contents of the various components and a mass ratio of the phosphoric acid ester compound and the phosphinic acid salt within specific ranges, and by a phase that contains the (a) component forming a continuous phase. In this manner, the inventor completed the present disclosure.

Specifically, the present disclosure is as indicated in the present claims.

According to the present disclosure, it is possible to obtain a resin composition that has excellent chemical resistance and flame retardance while also having good molding fluidity in practical use.

DETAILED DESCRIPTION

The following provides a detailed description of an embodiment of the present disclosure (hereinafter, also referred to as the "present embodiment"). Note that the present embodiment set forth below is an illustrative embodiment for describing the present disclosure and is not intended to limit the present disclosure to the following matter. The present disclosure can be implemented with appropriate modifications that are within the scope of the essence thereof.

{Resin composition}

A resin composition of the present embodiment contains:

(a) a polyphenylene ether resin or a mixed resin of (a-1) a polyphenylene ether resin and (a-2) a styrene resin;
(b) a hydrogenated block copolymer;
(c) a phosphoric acid ester compound; and
(d) at least one selected from the group consisting of a phosphinic acid salt represented by general formula (I), shown below, a diphosphinic acid salt represented by general formula (II), shown below, and a condensate thereof, wherein

relative to 100 parts by mass, in total, of the (a) component and the (b) component:

the (a) component is 50 parts by mass to 80 parts by mass;
the (b) component is 20 parts by mass to 50 parts by mass; and
the (c) component and the (d) component are 17 parts by mass to 40 parts by mass, in total,
a mass ratio (c)/(d) of the (c) component and the (d) component is 5/95 to 30/70,
the (a-1) polyphenylene ether resin is 40 mass% to 80 mass% and the (a-2) styrene resin is 20 mass% to 60 mass% in 100 mass% of the mixed resin of the (a-1) polyphenylene ether resin and the (a-2) styrene resin, and
a phase that contains the (a) component forms a continuous phase.

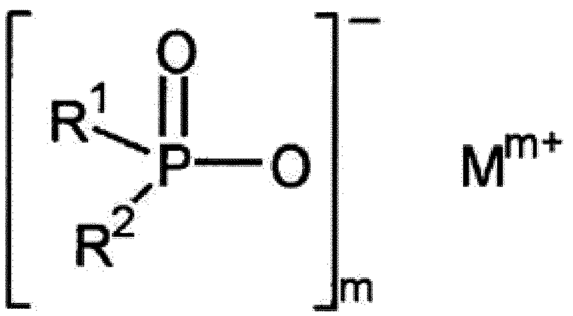

(I)

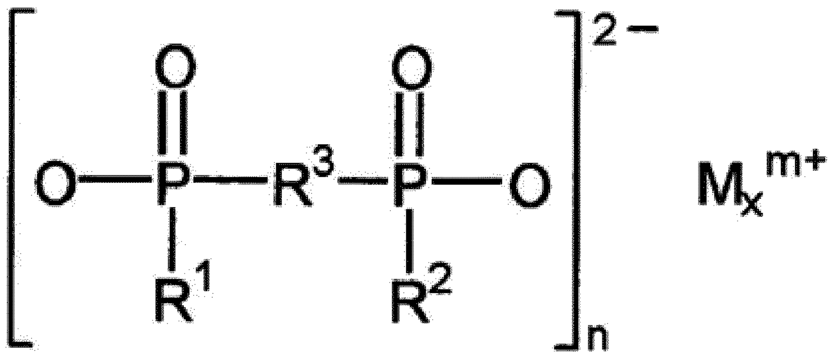

(II)

(In formulae (I) and (II),
$R^1$ and $R^2$ are each, independently of one another, a linear or branched alkyl group having a carbon number of 1 to 6 or an aryl group having a carbon number of 6 to 10,
$R^3$ is one selected from the group consisting of a linear or branched alkylene group having a carbon number of 1 to 10, an arylene group having a carbon number of 6 to 10, an alkylarylene group having a carbon number of 6 to 10, and an arylalkylene group having a carbon number of 6 to 10,
M is at least one selected from the group consisting of a calcium ion, a magnesium ion, an aluminum ion, a zinc ion, a bismuth ion, a manganese ion, a sodium ion, a potassium ion, and a cationized nitrogenous base, and
m is an integer of 1 to 3, n is an integer of 1 to 3, x is 1 or 2, and 2n = mx.)

<(a) (a-1) Polyphenylene ether resin or mixed resin of (a-1) polyphenylene ether resin and (a-2) styrene resin>

The (a) component in the present embodiment is (a-1) a polyphenylene ether resin (hereinafter, also referred

to as an "(a-1) component") or a mixture of (a-1) a polyphenylene ether resin and (a-2) a styrene resin (hereinafter, also referred to as an "(a-2) component").

One type of (a) component may be used individually, or two or more types of (a) components may be used in combination.

«(a-1) Polyphenylene ether resin»

The (a-1) polyphenylene ether resin contained in the resin composition of the present embodiment can be a homopolymer that is composed of a structural unit of the following general formula (V) or a copolymer that includes a structural unit of the following general formula (V) (hereinafter, also referred to simply as a "polyphenylene ether").

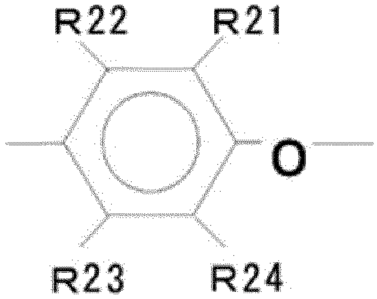

・・・(V)

(In general formula (V), O is an oxygen atom and R21 to R24 are each, independently of one another, one selected from the group consisting of a hydrogen atom, a halogen atom, a primary or secondary lower alkyl group ("lower alkyl group" refers to an alkyl group having a carbon number of 1 to 8), a phenyl group, a haloalkyl group, an aminoalkyl group, a hydrocarbon oxy group, and a halohydrocarbon oxy group (with a proviso that a halogen atom and an oxygen atom are separated by at least two carbon atoms).)

Examples of homopolymers that may serve as the polyphenylene ether resin include, but are not limited to, poly(2,6-dimethyl-1,4-phenylene ether), poly(2-methyl-6-ethyl-1,4-phenylene ether), poly(2-methyl-6-phenyl-1,4-phenylene ether), and poly(2,6-dichloro-1,4-phenylene ether).

Examples of copolymers that may serve as the polyphenylene ether resin include, but are not limited to, copolymers of 2,6-dimethylphenol with other phenols (for example, a copolymer with 2,3,6-trimethylphenol or a copolymer with 2-methyl-6-butylphenol such as described in JP S52-17880 B).

Of these examples, poly(2,6-dimethyl-1,4-phenylene ether), a copolymer of 2,6-dimethylphenol and 2,3,6-trimethylphenol, or a mixture thereof is preferable as the polyphenylene ether resin from a viewpoint of balance of mechanical properties and productivity.

The method by which the polyphenylene ether resin used in the present embodiment is produced may be, but is not limited to, a commonly known production method such as described in US 3306874 A, US 3306875 A, US 3257357 A, US 3257358 A, JP S50-51197 A, JP S52-17880 B, or JP S63-152628 A.

The reduced viscosity (measured for 0.5 g/dL chloroform solution at 30°C using Ubbelohde-type viscometer) of the polyphenylene ether resin is preferably within a range of 0.30 dL/g to 0.65 dL/g from a viewpoint of molding fluidity and balance of physical properties. The reduced viscosity is more preferably within a range of 0.40 dL/g to 0.60 dL/g, and even more preferably within a range of 0.45 dL/g to 0.55 dL/g. Excellent impact strength and chemical resistance are obtained when the reduced viscosity is 0.30 dL/g or more. Moreover, excellent molding fluidity is obtained when the reduced viscosity is 0.65 dL/g or less.

Note that a blend of two or more polyphenylene ether resins having different reduced viscosities can also preferably be used in the present embodiment.

Furthermore, the (a-1) polyphenylene ether resin in the present embodiment may include a modified polyphenylene ether that is fully or partially modified.

The term "modified polyphenylene ether" refers to a polyphenylene ether that has been modified by a modifying compound that includes at least one carbon-carbon double bond or triple bond in its molecular structure and also includes at least one group selected from the group consisting of a carboxyl group, an acid anhydride group, an amino group, a hydroxy group, and a glycidyl group (hereinafter, also referred to simply as a "modifying compound"). One type of modifying compound may be used individually, or two or more types of modifying compounds may be used together.

The method by which the modified polyphenylene ether is produced may be, but is not limited to, a method in which, in the presence or absence of a radical initiator, (1) a polyphenylene ether is reacted with a modifying compound at a temperature within a range of not lower than 100°C and lower than the glass-transition temperature of the polyphenylene ether, without melting the polyphenylene ether, (2) a polyphenylene ether is melt-kneaded and reacted with a

modifying compound at a temperature within a range of not lower than the glass-transition temperature of the polyphenylene ether and not higher than 360°C, or (3) a polyphenylene ether and a modifying compound are reacted in solution at a temperature that is lower than the glass-transition temperature of the polyphenylene ether. Although any of these methods may be used, method (1) or (2) is preferable from a viewpoint of productivity.

The following describes the modifying compound that is used to produce the modified polyphenylene ether and that includes at least one carbon-carbon double bond or triple bond in the molecular structure thereof and also includes at least one group selected from the group consisting of a carboxyl group, an acid anhydride group, an amino group, a hydroxy group, and a glycidyl group.

Examples of modifying compounds that include a carbon-carbon double bond in a molecule thereof while also including a carboxyl group or an acid anhydride group include, but are not limited to, maleic acid, fumaric acid, chloromaleic acid, cis-4-cyclohexene-1,2-dicarboxylic acid, and acid anhydrides of these compounds.

In particular, fumaric acid, maleic acid, and maleic anhydride are preferable, and fumaric acid and maleic anhydride are more preferable from a viewpoint of reactivity with a polyphenylene ether resin.

Moreover, a compound in which one or two of the two carboxyl groups included in any of these unsaturated dicarboxylic acids are esterified can be used as a modifying compound.

Examples of modifying compounds that include a carbon-carbon double bond in a molecule thereof while also including a glycidyl group include, but are not limited to, allyl glycidyl ether, glycidyl acrylate, glycidyl methacrylate, and epoxidized natural fats and oils. Of these examples, glycidyl acrylate and glycidyl methacrylate are preferable.

Examples of modifying compounds that include a carbon-carbon double bond in a molecule thereof while also including a hydroxy group include, but are not limited to, unsaturated alcohols having a general formula $C_nH_{2n-1}OH$ or $C_nH_{2n-3}OH$ (n is a positive integer), such as allyl alcohol, 4-penten-1-ol, and 1,4-pentadien-3-ol, and unsaturated alcohols having a general formula of $C_nH_{2n-5}OH$ or $C_nH_{2n-7}OH$ (n is a positive integer).

One of the modifying compounds described above may be used individually, or two or more of the modifying compounds described above may be used in combination.

Effects of modification of the polyphenylene ether are readily expressed when the additive amount of the modifying compound in production of the modified polyphenylene ether is 0.1 parts by mass or more relative to 100 parts by mass of the polyphenylene ether, whereas side effects of modification are not readily expressed when the additive amount of the modifying compound is 10 parts by mass or less relative to 100 parts by mass of the polyphenylene ether. Therefore, the additive amount of the modifying compound is preferably 0.1 parts by mass to 10 parts by mass, more preferably 0.3 parts by mass to 5 parts by mass, and even more preferably 0.5 parts by mass to 3 parts by mass relative to 100 parts by mass of the polyphenylene ether from a viewpoint of modification efficiency.

In a case in which a radical initiator is used in production of the modified polyphenylene ether, excellent modification efficiency is obtained when the additive amount of the radical initiator is 0.001 parts by mass or more relative to 100 parts by mass of the polyphenylene ether. Moreover, reduction of molecular weight of the modified polyphenylene ether tends not to occur when the additive amount of the radical initiator is 1 part by mass or less. Therefore, the additive amount of the radical initiator is preferably 0.001 parts by mass to 1 part by mass, more preferably 0.01 parts by mass to 0.5 parts by mass, and even more preferably 0.05 parts by mass to 0.3 parts by mass relative to 100 parts by mass of the polyphenylene ether from a viewpoint of modification rate and balance of physical properties.

Moreover, the addition rate of the modifying compound to the modified polyphenylene ether is preferably 0.01 mass% to 5 mass%, more preferably 0.05 mass% to 3 mass%, and even more preferably 0.1 mass% to 1 mass% relative to 100 mass% of the modified polyphenylene ether.

Unreacted modifying compound and/or a polymer of the modifying compound may remain in the modified polyphenylene ether in an amount of less than 5 mass%, preferably 3 mass% or less, and more preferably 1 mass% or less.

«(a-2) Styrene resin»

The (a-2) styrene resin in the present embodiment is a homopolymer of a styrene compound or a copolymer obtained through polymerization of a styrene compound and a compound that is copolymerizable with the styrene compound, in the presence or absence of a rubbery polymer. However, the (a-2) styrene resin is not inclusive of copolymers that are included within the scope of the subsequently described (b) hydrogenated block copolymer.

Examples of the styrene compound include, but are not limited to, styrene, $\alpha$-methylstyrene, 2,4-dimethylstyrene, monochlorostyrene, p-methylstyrene, p-tert-butylstyrene, and ethylstyrene, of which, styrene is preferable.

Examples of the compound that is copolymerizable with the styrene compound include, but are not limited to, methacrylic acid esters such as methyl methacrylate and ethyl methacrylate; unsaturated nitrile compounds such as acrylonitrile and methacrylonitrile; and acid anhydrides such as maleic anhydride.

The used amount of the compound that is copolymerizable with the styrene compound is preferably 20 mass% or less, and more preferably 15 mass% or less relative to 100 mass% of the total amount thereof with the styrene compound.

Examples of the rubbery polymer include conjugated diene rubbers, copolymers of a conjugated diene and an aromatic vinyl compound, and ethylene-propylene copolymer rubbers. Of these examples, polybutadiene, a styrene-butadiene random copolymer, a styrene-butadiene block copolymer, or a rubber component obtained through partial or almost complete hydrogenation of any thereof (for example, a rubber component having a hydrogenation rate of 50% to 100%) is preferable.

The (a-2) styrene resin may be, but is not limited to, homopolystyrene, rubber-modified polystyrene (HIPS), styrene-acrylonitrile copolymer (AS resin), styrene-rubbery polymer-acrylonitrile copolymer (ABS resin), or another styrene copolymer, for example. Of these examples, homopolystyrene or rubber-modified polystyrene (HIPS) is preferable as the (a-2) styrene resin from a viewpoint of compatibility with the polyphenylene ether resin.

<(b) Hydrogenated block copolymer>

The resin composition of the present embodiment contains (b) a hydrogenated block copolymer.

The (b) hydrogenated block copolymer in the present embodiment is a hydrogenated block copolymer obtained through hydrogenation of a block copolymer of an aromatic vinyl compound and a conjugated diene compound such as a block copolymer of styrene and a conjugated diene compound (i.e., a block copolymer including a polystyrene block and a conjugated diene compound polymer block).

The hydrogenation rate of conjugated diene compound-derived unsaturated bonds resulting from the hydrogenation is preferably 60% or more, more preferably 80% or more, and even more preferably 95% or more from a viewpoint of thermal stability.

In a case in which the pre-hydrogenation block copolymer is a block copolymer of styrene and a conjugated diene compound, the structure of the block copolymer may be S-B-S, S-B-S-B, $(S-B-)_4$-S, S-B-S-B-S, or the like, where S represents a styrene block chain and B represents a diene compound block chain.

The microstructure of a polymer block of the conjugated diene compound (i.e., the bonding format of the conjugated diene compound) can be freely selected. The vinyl bond content (total of 1,2-vinyl bonds and 3,4-vinyl bonds) in a conjugated diene compound polymer block is preferably within a range of 2% to 60%, and more preferably within a range of 8% to 40% relative to the total bond content (total of 1,2-vinyl bonds, 3,4-vinyl bonds, and 1,4-conjugated bonds) in the conjugated diene compound polymer.

The number-average molecular weight of the (b) hydrogenated block copolymer is preferably 100,000 to 400,000, more preferably 150,000 to 350,000, and even more preferably 200,000 to 300,000.

When the number-average molecular weight of the (b) hydrogenated block copolymer is 100,000 or more, a resin composition having excellent impact resistance is obtained. The impact resistance of the resin composition of the present embodiment improves in proportion to the number-average molecular weight of the (b) hydrogenated block copolymer. Moreover, when the number-average molecular weight of the (b) hydrogenated block copolymer is 400,000 or less, a resin composition that has low load and excellent processing fluidity during melt-extrusion is obtained, and dispersibility of the (b) hydrogenated block copolymer in the resin composition is excellent.

Note that the number-average molecular weight referred to above is a standard polystyrene-equivalent value that is measured using a gel permeation chromatography measurement apparatus that includes a UV spectroscopic detector.

In a case in which the (b) hydrogenated block copolymer includes a styrene polymer block chain, the number-average molecular weight of at least one styrene polymer block chain is preferably 15,000 or more. This number-average molecular weight is more preferably not less than 20,000 and not more than 50,000. It is even more preferable that every styrene polymer block chain has a number-average molecular weight of 15,000 or more.

Although no specific limitations are placed on the proportion constituted by a styrene polymer block chain in the (b) hydrogenated block copolymer in a case in which the (b) hydrogenated block copolymer includes a styrene polymer block chain so long as the number-average molecular weight of the styrene polymer block chain is within any of the ranges set forth above, this proportion is preferably 10 mass% to 70 mass%, more preferably 20 mass% to 50 mass%, and even more preferably 30 mass% to 40 mass% from a viewpoint of impact resistance.

Two or more types of hydrogenated block copolymers that differ in terms of chemical composition and/or structure can be used together as the (b) hydrogenated block copolymer.

Examples include combined use of a hydrogenated block copolymer having a bound styrene polymer block content of 50 mass% or more and a hydrogenated block copolymer having a bound styrene polymer block content of 30 mass% or less, combined use of hydrogenated block copolymers having different molecular weights, and combined use of a hydrogenated random block copolymer obtained through hydrogenation of a block copolymer that includes a random copolymer block of styrene and a conjugated diene compound and a block copolymer of styrene and a conjugated diene compound such as described.

Note that the "bound styrene polymer block content" is the proportion constituted by a styrene polymer block chain in the (b) hydrogenated block copolymer.

<(c) Phosphoric acid ester compound>

The (c) phosphoric acid ester compound contained in the resin composition of the present embodiment may be any organophosphoric acid ester that is typically used as a flame retardant.

One type of (c) component may be used individually, or two or more types of (c) components may be used in combination.

Examples of the (c) phosphoric acid ester compound include, but are not limited to, triphenyl phosphate, tris(nonylphenyl) phosphate, resorcinol bis(diphenyl phosphate), resorcinol bis[di(2,6-dimethylphenyl) phosphate], 2,2-bis{4-[bis(phenoxy)phosphoryloxy]phenyl} propane, and 2,2-bis{4-[bis(methylphenoxy)phosphoryloxy]phenyl}propane.

Further examples of the (c) phosphoric acid ester flame retardant other than those described above include phosphoric acid ester flame retardants such as trimethyl phosphate, triethyl phosphate, tributyl phosphate, trioctyl phosphate, tributoxyethyl phosphate, tricresyl phosphate, cresyl phenyl phosphate, octyl diphenyl phosphate, and diisopropyl phenyl phosphate; monophosphoric acid ester compounds such as diphenyl-4-hydroxy-2,3,5,6-tetrabromobenzyl phosphonate, dimethyl-4-hydroxy-3,5-dibromobenzyl phosphonate, diphenyl-4-hydroxy-3,5-dibromobenzyl phosphonate, tris(chloroethyl) phosphate, tris(dichloropropyl) phosphate, tris(chloropropyl) phosphate, bis(2,3-dibromopropyl)-2,3-dichloropropyl phosphate, tris(2,3-dibromopropyl) phosphate, bis(chloropropyl) monooctyl phosphate, hydroquinonyl diphenyl phosphate, phenyl nonylphenyl hydroquinonyl phosphate, and phenyl dinonylphenyl phosphate; and aromatic condensed phosphoric acid ester compounds.

Of these examples, aromatic condensed phosphoric acid ester compounds are preferable due to having little gas release during processing and excellent thermal stability, etc.

The aromatic condensed phosphoric acid ester compound may be a compound that is generally commercially available, examples of which include, but are not limited to, CR741, CR733S, PX200, and E890 of Daihachi Chemical Industry Co., Ltd., and FP600, FP700, and FP800 of Adeka Corporation.

The (c) phosphoric acid ester that is used in the present embodiment is preferably an aromatic condensed phosphoric acid ester represented by the following general formula (III) or the following general formula (IV).

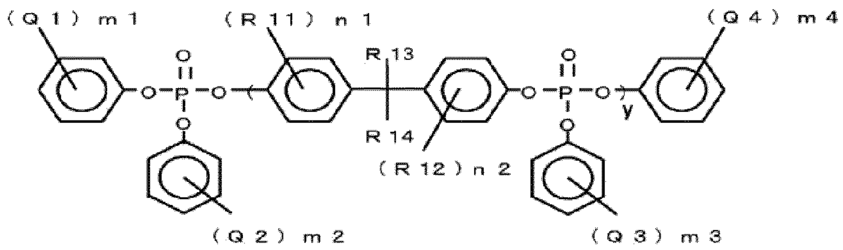

・・・(III)

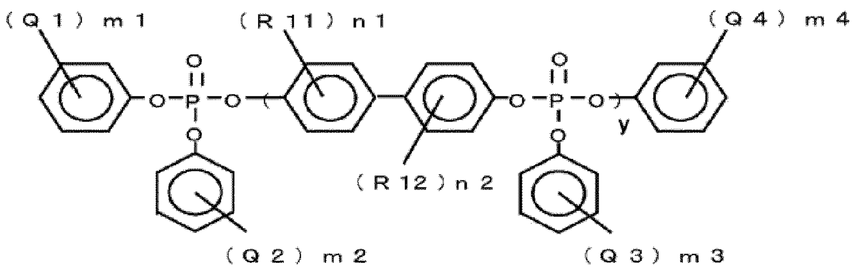

・・・(IV)

(In general formulae (III) and (IV), Q1, Q2, Q3, and Q4 are each, independently of one another, an alkyl group having a carbon number of 1 to 6; R11 and R12 are each a methyl group; R13 and R14 are each, independently of one another, a hydrogen atom or a methyl group; y is an integer of 1 or more; n1 and n2 are each, independently of one another, an integer of 0 to 2; and m1, m2, m3, and m4 are each, independently of one another, an integer of 0 to 3.)

In molecules of phosphoric acid ester compounds represented by the preceding general formulae (III) and (IV), y is an integer of 1 or more, and is preferably an integer of 1 to 3.

Of phosphoric acid ester compounds represented by general formulae (III) and (IV), one preferable example is a condensed phosphoric acid ester for which m1, m2, m3, m4, n1, and n2 are each 0 and R13 and R14 are each a methyl group in general formula (III).

Another preferable example is a condensed phosphoric acid ester for which Q1, Q2, Q3, Q4, R13, and R14 are each a methyl group, n1 and n2 are each 0, and m1, m2, m3, and m4 are each an integer of 1 to 3 in general formula

(III), and for which 50 mass% or more a phosphoric acid ester where y is an integer of 1 to 3, in particular, 1 is included relative to 100 mass% of the (c) component.

More preferable examples among these condensed phosphoric acid ester compounds include condensed phosphoric acid ester compounds that have an acid value of 0.1 or less (value obtained in accordance with JIS K2501).

<(d) At least one selected from group consisting of phosphinic acid salt represented by following general formula (I), diphosphinic acid salt represented by following general formula (II), and condensate thereof>

The (d) component in the present embodiment is at least one selected from the group consisting of a phosphinic acid salt represented by general formula (I), shown below, a diphosphinic acid salt represented by general formula (II), shown below, and a condensate thereof.

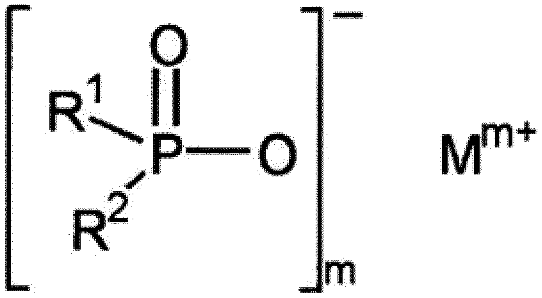

(I)

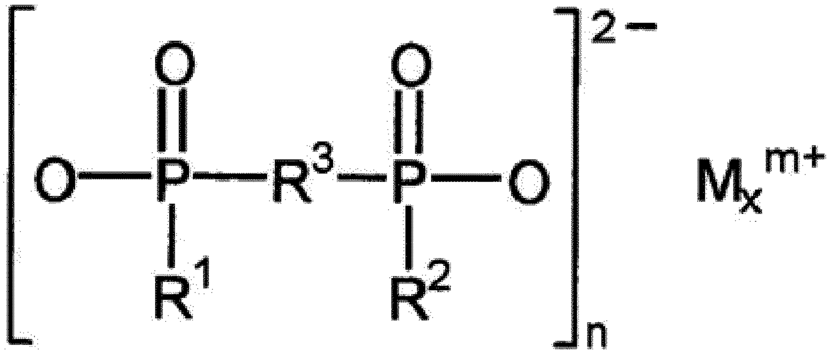

(II)

(In general formulae (I) and (II),

$R^1$ and $R^2$ are each, independently of one another, a linear or branched alkyl group having a carbon number of 1 to 6 or an aryl group having a carbon number of 6 to 10,
$R^3$ is one selected from the group consisting of a linear or branched alkylene group having a carbon number of 1 to 10, an arylene group having a carbon number of 6 to 10, an alkylarylene group having a carbon number of 6 to 10, and an arylalkylene group having a carbon number of 6 to 10,
M is at least one selected from the group consisting of a calcium ion, a magnesium ion, an aluminum ion, a zinc ion, a bismuth ion, a manganese ion, a sodium ion, a potassium ion, and a cationized nitrogenous base, and
m is an integer of 1 to 3, n is an integer of 1 to 3, x is 1 or 2, and 2n = mx.)

The phosphinic acid salt, diphosphinic acid salt, or condensate thereof (hereinafter, the term "phosphinate" is also used to refer collectively thereto) of the (d) component in the present embodiment can be produced by a commonly known method described in EP 699708 A or JP H08-73720 A, for example.

The production method of the (d) phosphinate may be, but is not limited to, a method in which a phosphinic acid is reacted with a metal carbonate, a metal hydroxide, or a metal oxide in aqueous solution, for example, although another method, such as a sol-gel method, may be used.

The phosphinate is generally a monomeric compound but may, dependent on the reaction conditions, include an oligomeric phosphinic acid salt that is a condensate having a degree of condensation of 1 to 3 in accordance with the environment.

The constituent phosphinic acid of the (d) phosphinate may be, but is not limited to, dimethylphosphinic acid,

ethylmethylphosphinic acid, diethylphosphinic acid, methyl-n-propylphosphinic acid, methane di(methylphosphinic acid), benzene-1,4-(dimethylphosphinic acid), methylphenylphosphinic acid, diphenylphosphinic acid, or a mixture thereof, for example.

Moreover, a metal ion component of the (d) phosphinate that constitutes M in formulae (I) and (II) may be at least one selected from the group consisting of a calcium ion, a magnesium ion, an aluminum ion, a zinc ion, a bismuth ion, a manganese ion, a sodium ion, a potassium ion, and a cationized nitrogenous base, and is preferably at least one selected from a calcium ion, a magnesium ion, an aluminum ion, and a zinc ion from a viewpoint of thermal stability.

The cationized nitrogenous base may be a cationized base such as ammonia, melamine, or triethanolamine.

Examples of the (d) phosphinate include, but are not limited to, calcium dimethylphosphinate, magnesium dimethylphosphinate, aluminum dimethylphosphinate, zinc dimethylphosphinate, calcium ethylmethylphosphinate, magnesium ethylmethylphosphinate, aluminum ethylmethylphosphinate, zinc ethylmethylphosphinate, calcium diethylphosphinate, magnesium diethylphosphinate, aluminum diethylphosphinate, zinc diethylphosphinate, calcium methyl-n-propylphosphinate, magnesium methyl-n-propylphosphinate, aluminum methyl-n-propylphosphinate, zinc methyl-n-propylphosphinate, calcium methane di(methylphosphinate), magnesium methane di(methylphosphinate), aluminum methane di(methylphosphinate), zinc methane di(methylphosphinate), calcium benzene-1,4-(dimethylphosphinate), magnesium benzene-1,4-(dimethylphosphinate), aluminum benzene-1,4-(dimethylphosphinate), zinc benzene-1,4-(dimethylphosphinate), calcium methylphenylphosphinate, magnesium methylphenylphosphinate, aluminum methylphenylphosphinate, zinc methylphenylphosphinate, calcium diphenylphosphinate, magnesium diphenylphosphinate, aluminum diphenylphosphinate, and zinc diphenylphosphinate.

In particular, calcium dimethylphosphinate, aluminum dimethylphosphinate, zinc dimethylphosphinate, calcium ethylmethylphosphinate, aluminum ethylmethylphosphinate, zinc ethylmethylphosphinate, calcium diethylphosphinate, aluminum diethylphosphinate, and zinc diethylphosphinate are preferable from a viewpoint of flame retardance and mold deposit inhibition.

The (d) component is preferably particles having an average particle diameter (d50%, measured by laser diffraction) of not less than 0.2 μm and less than 40 μm. The average particle diameter is more preferably more than 0.5 μm and not more than 30 μm, even more preferably more than 0.5 μm and not more than 20 μm, and further preferably more than 1.0 μm and not more than 10 μm.

The method by which particles of the (d) component having an average particle diameter that is within any of the ranges set forth above are obtained may be, but is not limited to, a method in which a lump of a phosphinate having a particle diameter of not less than any of the numerical ranges set forth above is dispersed in a specific solvent, is wet pulverized, and is then classified, for example.

In particular, the use of a fine powder having an average particle diameter of more than 0.5 μm and not more than 20 μm is preferable because excellent flame retardance and impact resistance are obtained.

Moreover, unreacted material and/or by-products may remain in the (d) phosphinate used in the present embodiment so long as the disclosed effects are not lost.

<Additives>

So long as the disclosed effects are not lost, additives such as plasticizers, antioxidants, ultraviolet absorbers and other stabilizers, antistatic agents, release agents, dyes and pigments, fillers, reinforcing materials, spreading agents, and resins other than those described above can be added to the resin composition of the present embodiment in order to impart other properties. Moreover, further improvement of flame retardance is possible through the addition of various types of conventionally known flame retardants and flame retardant synergists, such as alkaline earth metal hydroxides (for example, magnesium hydroxide), aluminum hydroxide, alkali metal hydroxides, zinc borate compounds, zinc stannate compounds, and the like that contain water of crystallization.

<Content of each component>

The contents of the (a) polyphenylene ether resin and the (b) hydrogenated block copolymer in the resin composition of the present embodiment are 50 parts by mass to 80 parts by mass of the (a) polyphenylene ether resin and 20 parts by mass to 50 parts by mass of the (b) hydrogenated block copolymer relative to 100 parts by mass, in total, of the (a) polyphenylene ether resin and the (b) hydrogenated block copolymer from a viewpoint of flame retardance and chemical resistance. These contents are more preferably 52 parts by mass to 75 parts by mass of the (a) polyphenylene ether resin and 25 parts by mass to 48 parts by mass of the (b) hydrogenated block copolymer, and even more preferably not less than 55 parts by mass and less than 70 parts by mass of the (a) polyphenylene ether resin and more than 30 parts by mass and not more than 45 parts by mass of the (b) hydrogenated block copolymer. Specifically, flame retardance and rigidity tend to be excellent when the (a) polyphenylene ether resin is 50 parts by mass or more, whereas chemical resistance and impact resistance tend to be excellent when the content of the (b) hydrogenated block copolymer

is 20 parts by mass or more.

The mass ratio of the (a-1) polyphenylene ether resin and the (a-2) styrene resin in the (a) polyphenylene ether resin is 40 mass% to 80 mass% of the (a-1) polyphenylene ether resin and 20 mass% to 60 mass% of the (a-2) styrene resin when the total of both is taken to be 100 mass% from a viewpoint of flame retardance and molding fluidity. In particular, this mass ratio is preferably 40 mass% to 75 mass% of the (a-1) polyphenylene ether resin and 25 mass% to 60 mass% of the (a-2) styrene resin, and more preferably 45 mass% to 69 mass% of the (a-1) polyphenylene ether resin and 31 mass% to 55 mass% of the (a-2) styrene resin in order to obtain a resin composition having particularly good flame retardance and molding fluidity. Specifically, flame retardance tends to be excellent when the (a-1) polyphenylene ether resin is 40 mass% or more, whereas molding fluidity tends to be excellent when the (a-2) styrene resin is 20 mass% or more.

The total content of the (c) phosphoric acid ester compound and the (d) phosphinate is 17 parts by mass to 40 parts by mass relative to 100 parts by mass, in total, of the (a) polyphenylene ether resin and the (b) hydrogenated block copolymer from a viewpoint of flame retardance. In particular, the total content thereof is preferably 21 parts by mass to 40 parts by mass, and more preferably 21 parts by mass to 35 parts by mass in order to obtain a resin composition having an excellent balance of flame retardance, chemical resistance, and molding fluidity. Specifically, flame retardance tends to be excellent when the total content of the (c) phosphoric acid ester compound and the (d) phosphinate is 17 parts by mass or more, whereas chemical resistance and molding fluidity tend to be excellent when the total content of the (c) phosphoric acid ester compound and the (d) phosphinate is 40 parts by mass or less.

Moreover, the mass ratio (c)/(d) of the (c) phosphoric acid ester compound and the (d) phosphinate is 5/95 to 30/70 from a viewpoint of chemical resistance and molding fluidity. Specifically, molding fluidity tends to be excellent when the ratio (c)/(d) is 5/95 or more, whereas chemical resistance tends to be excellent when the ratio (c)/(d) is 30/70 or less.

The content of the previously described additives in the resin composition of the present embodiment is preferably 10 mass% or less, more preferably 5 mass% or less, and even more preferably 3 mass% or less relative to 100 mass% of the resin composition.

In particular, in a case in which the resin composition of the present embodiment contains a polyolefin as an additive (resin other than those described above), the content of the polyolefin in 100 mass% of the resin composition is preferably less than 10 mass%, more preferably 5 mass% or less, even more preferably 3 mass% or less, and particularly preferably 1 mass% or less from a viewpoint of flame retardance.

<Morphology>

In the morphology of the resin composition of the present embodiment, a phase that contains the (a) component forms a continuous phase from a viewpoint of flame retardance. Depending on the type of thermoplastic resin, the morphology can be judged by, for example, performing staining using a commonly known dye such as ruthenium tetroxide or osmium tetroxide, and then observing an image at a magnification of $\times$ 10,000 using a transmission microscope or the like.

(Production method of resin composition)

The resin composition of the present embodiment can be produced by, for example, melt-kneading the (a) component, the (b) component, the (c) component, the (d) component, and so forth using a twin screw extruder.

The twin screw extruder may, for example, be a twin screw extruder of the ZSK series produced by Coperion Inc., the TEM series produced by Toshiba Machine Co., Ltd., or the TEX series produced by The Japan Steel Works, Ltd.

In the production method of the resin composition of the present embodiment, the melt-kneading temperature, screw speed, and so forth can be selected as appropriate as suitable conditions from ranges of a melt-kneading temperature of 100°C to 370°C and a screw speed of 100 rpm to 1,200 rpm.

A raw material feeding device that is used to feed raw material to the twin screw extruder may be a single screw feeder, a twin screw feeder, a table feeder, a rotary feeder, or the like, for example, of which, a loss-in weight feeder is preferable from a viewpoint of having little variation/error of raw material feeding.

In a case in which a liquid raw material is to be added, the liquid raw material may be added through direct feeding into the cylinder system using a liquid addition pump, or the like, in a cylinder part of the extruder. The liquid addition pump may be, but is not specifically limited to, a gear pump, a flange pump, or the like, for example, and is preferably a gear pump. In this situation, it is preferable that the viscosity of the liquid raw material is reduced in advance through heating by a heater, or the like, of a section that serves as a flow path of the liquid raw material, such as a tank where the liquid raw material is stored, a pipe between this tank and the liquid addition pump, or a pipe between the pump and the extruder cylinder, from a viewpoint of reducing the load on the liquid addition pump and increasing workability of the raw material.

(Molded product)

The resin composition of the present embodiment may be molded to obtain a molded product. This molded product contains at least the resin composition of the present embodiment.

The molding method can be a commonly known molding method such as injection molding, blow molding, extrusion molding, sheet forming, or film forming, with a method using an injection molding machine, in particular, being preferable. The injection molding machine may, for example, be an "SH100C" produced by Sumitomo Heavy Industries, Ltd., or the like.

The melting temperature, mold temperature, and so forth in the molding method of the resin composition of the present embodiment can be selected as appropriate as suitable conditions from ranges of a melting temperature of 200°C to 320°C and a mold temperature of 30°C to 100°C.

The molded product can be used as various molded products in broad fields such as the fields of industrial components, electrical/electronic components, office equipment housings, automotive components, and precision components, and, in particular, can suitably be used as a connecting structure for a photovoltaic module such as a photovoltaic module connector or a junction box for solar cells.

EXAMPLES

The following provides a more detailed description of the present disclosure through specific examples and comparative examples. However, the present disclosure is not limited to the following examples.

Raw materials used in resin compositions of the examples and comparative examples were as indicated below.

-(a) Polyphenylene ether resin or mixed resin of polyphenylene ether resin and styrene resin-

(a-1) Poly(2,6-dimethyl-1,4-phenylene ether) having reduced viscosity (measured for 0.5 g/dL chloroform solution at 30°C using Ubbelohde-type viscometer) of 0.5 dL/g

(a-2) High impact polystyrene (HIPS); CT60 produced by Petrochemicals (Malaysia) Sdn Bhd (rubbery polymer content: 10 mass%)

-(b) Hydrogenated block copolymer-

TAIPOL 6151 produced by TSRC Corporation (number-average molecular weight: approximately 280,000)

-(c) Phosphoric acid ester compound-

(c-1) E890 produced by Daihachi Chemical Industry Co., Ltd.

(c-2) PX200 produced by Daihachi Chemical Industry Co., Ltd.

-(d) Phosphinate-

Exolit OP 930 produced by Clariant (average particle diameter: 3 μm)
Measurement methods of physical properties in the examples and comparative examples were as follows.

{Measurement methods}

<Chemical resistance>

Resin composition pellets obtained in each example or comparative example were fed into a small-size injection molding machine (product name: SH100C; produced by Sumitomo Heavy Industries, Ltd.) set to a cylinder temperature of 280°C and were molded under conditions of a mold temperature of 80°C to obtain a flat plate of 120 mm × 80 mm × 3 mm. A specimen having a strip shape (80 mm × 12.5 mm × 3 mm) was cut out from the flat plate such that a longitudinal direction thereof was at a right angle to the flow direction. The specimen was attached onto a curved surface of a bending bar having a vertical cross-section modelling a parabola expressed by an equation $y^2 = 6x$ ($x \geq 0$, $y \geq 0$), where a horizontal direction is the x axis and a vertical direction is the y axis, using a jig such that there was no gap

between the bar and the specimen. On the bending bar, a position where x = 0 and y = 0 in the vertical cross-section thereof was set as an arrangement position of a measurement starting point end of the specimen and a position where x > 0 and y > 0 was set as an arrangement position of a measurement end point end of the specimen.

After the specimen had been attached to the bending bar as described above, processing oil G-6280 (produced by Nihon Kohsakuyu Co., Ltd.) was applied onto the surface of the specimen, and was left under conditions of 40°C for 24 hours. In a case in which cracking of the surface of the specimen has occurred after 24 hours, a critical position at which cracking occurred (position having a largest value for x in the x axis direction of the bending bar) was determined.

The critical position at which cracking occurred was determined by copying a scale of x axis coordinates of the bending bar to the specimen while the specimen was in a state attached to the bending bar, detaching the specimen from the bending bar, subsequently checking for the presence of cracks, and then determining the critical position through comparison with the scale transferred at a position where a crack was present (the critical position is a position corresponding to an x axis coordinate of the bending bar, and thus is not the periphery length of the specimen).

In the present disclosure, a crack is a fissure of 200 μm or more in the flow direction seen during observation of the surface of a specimen using a microscope such as a VHX-5000 (produced by Keyence Corporation).

The critical strain (%) was calculated from the thickness of the specimen and the critical position at which cracking occurred by the following equation. A larger critical strain was judged to indicate better chemical resistance.

$$\text{Critical strain (\%)} = d \times 3^{1/2}/2(3 + 2x)^{3/2} \times 100$$

d: Thickness of specimen (inches)
x: Stop position of cracks (inches)

<Flame retardance>

Flame retardance was evaluated based on the UL-94 vertical flame test using an injection molded specimen of 0.75 mm in thickness.

First, resin composition pellets obtained in each example or comparative example were fed into a small-size injection molding machine (product name: SH100C; produced by Sumitomo Heavy Industries, Ltd.) that was set to a cylinder temperature of 300°C to 320°C, and were injection molded under conditions of an injection rate of 20%, an injection pressure of 99%, and a mold temperature of 90°C to mold five specimens having dimensions defined by the aforementioned standard (125 mm (length) × 13 mm (width) × 0.75 mm (thickness)).

A flame of a gas burner was applied against each of the specimens, and the degree of burning of the specimen was evaluated.

Note that flame retardance classes classified by the UL94 vertical test are indicated in the flame retardance grades. A judgment was made by performing five tests using all of the specimens. The method of classification is outlined below.

In particular, flame retardance was judged to be excellent in a case in which a judgment of flame retardance level V-0 or higher was made.

[Flame retardance grades]

V-0: Total burning time of 50 s or less for five specimens; maximum burning time of 10 s or less; and absence of burning drippings are all satisfied
V-1: Total burning time of 250 s or less for five specimens; maximum burning time of 30 s or less; and absence of burning drippings are all satisfied
Vout: At least one of total burning time of more than 250 s for five specimens; maximum burning time of more than 30 s; and presence of burning drippings is satisfied (cases not classified as V-0 or V-1)

<Molding fluidity>

Resin composition pellets obtained in each example or comparative example were fed into a small-size injection molding machine (product name: SH100C; produced by Sumitomo Heavy Industries, Ltd.) and were used to injection mold a specimen (125 mm (length) × 13 mm (width) × 0.75 mm (thickness)) for flame retardance evaluation such as described above under conditions of a cylinder temperature of 300°C, an injection rate of 20%, an injection pressure of 99%, and a mold temperature of 90°C. In a case in which molding was not possible due to insufficient fluidity, the cylinder

temperature was raised in increments of 10°C, and molding fluidity was evaluated based on the cylinder temperature (°C) at which molding was possible. A lower cylinder temperature was judged to indicate better molding fluidity.

<Morphology>

An ultramicrotome was used to prepare an ultrathin slice of tens of nanometers to one hundred nanometers in thickness from a molded product that was produced in the same way as the specimen for chemical resistance evaluation. The ultrathin slice was subsequently stained using osmium tetroxide and ruthenium tetroxide, the stained ultrathin slice was observed using a transmission electron microscope (TEM; product name: HT7700; produced by Hitachi High-Technologies Corporation), and an image thereof was obtained at ×10,000 magnification. A judgment as to whether a phase containing an (a) component formed a continuous phase was made based on the obtained image.

The following describes each of the examples and comparative examples in detail.

{Examples 1 to 5 and Comparative Examples 1 to 10}

A twin screw extruder (product name: ZSK-25WLE; produced by Coperion Inc.) was used as a production apparatus for a resin composition. In the twin screw extruder, the number of barrels was 12 blocks, and, in the direction of raw material flow, an upstream feeding port was provided in the 1st barrel from upstream, a liquid addition pump was provided in the 7th barrel, and vacuum vents were provided in the 5th barrel and the 11th barrel.

In the twin screw extruder set up as described above, (a) to (d) components were fed in each of the chemical compositions indicated in Tables 1 and 2 and were melt-kneaded under conditions of an extrusion temperature of 300°C to 320°C, a screw speed of 300 rpm, and an ejection rate of 15 kg/hr to obtain pellets of a resin composition.

When the morphologies of molded products produced from the resin compositions of Examples 1 to 5 and Comparative Examples 1 to 10 were observed by the previously described method, a component containing the (a) component was determined to form a continuous phase in each of these molded products.

Table 1

| | | | | Example 1 | Example 2 | Example 3 | Example 4 | Example 5 |
|---|---|---|---|---|---|---|---|---|
| Chemical composition and production method | Upstream feeding port | (a-1) | Parts by mass | 42.5 | 42.5 | 52.0 | 64.0 | 42.5 |
| | | (a-2) | Parts by mass | 22.5 | 37.5 | 13.0 | 16.0 | 22.5 |
| | | (b) | Parts by mass | 35.0 | 20.0 | 35.0 | 20.0 | 35.0 |
| | Liquid addition pump | (c-1) | Parts by mass | 5.0 | 5.0 | 5.0 | 5.0 | |
| | Upstream feeding port | (c-2) | Parts by mass | | | | | 5.0 |
| | | (d) | Parts by mass | 20.0 | 20.0 | 20.0 | 20.0 | 20.0 |
| Content of each component | Total amount of (a) and (b) components | | Parts by mass | 100.0 | 100.0 | 100.0 | 100.0 | 100.0 |
| | Content of (a) component relative to 100 parts by mass of (a) and (b) components | | Parts by mass | 65.0 | 80.0 | 65.0 | 80.0 | 65.0 |
| | Content of (b) component relative to 100 parts by mass of (a) and (b) components | | Parts by mass | 35.0 | 20.0 | 35.0 | 20.0 | 35.0 |
| | Content of (c) and (d) components relative to 100 parts by mass of (a) and (b) components | | Parts by mass | 25.0 | 25.0 | 25.0 | 25.0 | 25.0 |
| | Content of (a-1) component in (a) component | | Mass% | 65.4 | 53.1 | 80.0 | 80.0 | 65.4 |
| | Content of (a-2) component in (a) component | | Mass% | 34.6 | 46.9 | 20.0 | 20.0 | 34.6 |
| | Mass ratio of (c) component and (d) component | | - | 20/80 | 20/80 | 20/80 | 20/80 | 20/80 |
| Physical properties | Chemical resistance | Critical strain | % | 1.0 | 0.7 | 1.1 | 0.8 | 1.0 |
| | Flame retardance | UL-94 vertical flame test | - | V-0 | V-0 | V-0 | V-0 | V-0 |
| | Molding fluidity | Cylinder temperature | °C | 300 | 300 | 310 | 310 | 300 |

Table 2

| | | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|---|---|
| Chemical composition and production method | Upstream feeding port | (a-1) | Parts by mass | 90.0 | 80.0 | 42.5 | 42.5 | 42.5 | 42.5 | 20.0 | 58.5 | 42.5 | 22.5 |
| | | (a-2) | Parts by mass | 5.0 | | 22.5 | 22.5 | 22.5 | 22.5 | 45.0 | 6.5 | 42.5 | 22.5 |
| | | (b) | Parts bv mass | 5.0 | 20.0 | 35.0 | 35.0 | 35.0 | 35.0 | 35.0 | 35.0 | 15.0 | 55.0 |
| | Liquid addition | (c-1) | Parts by mass | 5.0 | 10.0 | 25.0 | | 17.5 | 3.0 | 5.0 | 5.0 | 5.0 | 5.0 |
| | Upstream feeding port | (d) | Parts by mass | 10.0 | 10.0 | | 25.0 | 7.5 | 12.0 | 20.0 | 20.0 | 20.0 | 20.0 |

(continued)

| | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|---|
| Content of each component | Total amount of (a) and (b) components | Parts by mass | 100.0 | 100.0 | 100.0 | 100.0 | 100.0 | 100.0 | 100.0 | 100.0 | 100.0 | 100.0 |
| | Content of (a) component relative to 100 parts by mass of (a) and (b) components | Parts by mass | 95.0 | 80.0 | 65.0 | 65.0 | 65.0 | 65.0 | 65.0 | 65.0 | 85.0 | 45.0 |
| | Content of (b) component relative to 100 parts by mass of (a) and (b) components | Parts by mass | 5.0 | 20.0 | 35.0 | 35.0 | 35.0 | 35.0 | 35.0 | 35.0 | 15.0 | 55.0 |
| | Content of (c) and (d) components relative to 100 parts by mass of (a) and (b) components | Parts by mass | 15.0 | 20.0 | 25.0 | 25.0 | 25.0 | 15.0 | 25.0 | 25.0 | 25.0 | 25.0 |
| | Content of (a-1) component in (a) component | Mass% | 94.7 | 100.0 | 65.4 | 65.4 | 65.4 | 65.4 | 30.8 | 90.0 | 50.0 | 50.0 |
| | Content of (a-2) component in (a) component | Mass% | 5.3 | 0.0 | 34.6 | 34.6 | 34.6 | 34.6 | 69.2 | 10.0 | 50.0 | 50.0 |
| | Mass ratio of (c) component and (d) component | - | 33/67 | 50/50 | 100/0 | 0/100 | 70/30 | 20/80 | 20/80 | 20/80 | 20/80 | 20/80 |

(continued)

| | | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|---|---|
| Physical properties | Chemical resistance | Critical strain | % | 0.5 | 0.5 | 0.3 | 0.6 | 0.4 | 1.2 | 0.5 | 1.2 | 0.4 | 1.2 |
| | Flame retardance | UL-94 vertical flame test | - | V-1 | V-0 | V-0 | V-0 | V-0 | V-1 | V-1 | V-0 | V-0 | Vout |
| | Molding fluidity | Cylinder temperature | °C | 320 | 300 | 300 | 320 | 300 | 300 | 300 | 320 | 300 | 300 |

Excellent chemical resistance, flame retardance, and molding fluidity were obtained in each of Examples 1 to 5, and it was possible to mold a molded product having excellent chemical resistance, flame retardance, and molding fluidity using the resin composition according to the present embodiment.

INDUSTRIAL APPLICABILITY

The presently disclosed resin composition has industrial applicability as a material for an electrical/electronic component, a home appliance, OA equipment, a junction box or connector for a photovoltaic module, or the like.

## Claims

1. A resin composition comprising:

(a) (a-1) a polyphenylene ether resin or a mixed resin of (a-1) a polyphenylene ether resin and (a-2) a styrene resin;
(b) a hydrogenated block copolymer;
(c) a phosphoric acid ester compound; and
(d) at least one selected from the group consisting of a phosphinic acid salt represented by general formula (I), shown below, a diphosphinic acid salt represented by general formula (II), shown below, and a condensate thereof,

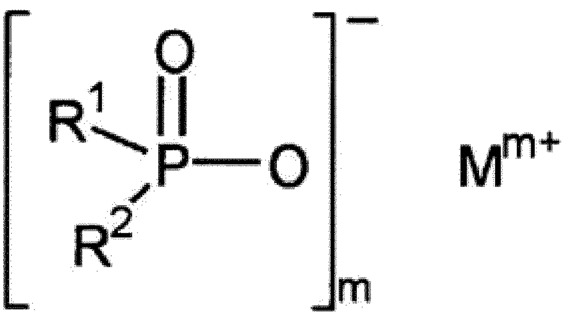

(I)

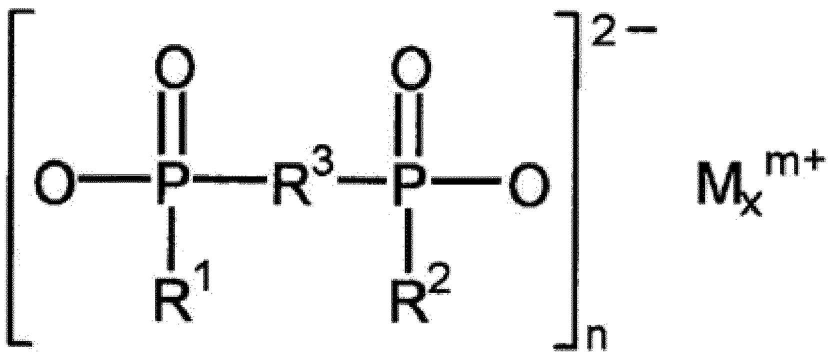

(II)

where, in general formulae (I) and (II),

$R^1$ and $R^2$ are each, independently of one another, a linear or branched alkyl group having a carbon number of 1 to 6 or an aryl group having a carbon number of 6 to 10,
$R^3$ is one selected from the group consisting of a linear or branched alkylene group having a carbon number of 1 to 10, an arylene group having a carbon number of 6 to 10, an alkylarylene group having a carbon number of 6 to 10, and an arylalkylene group having a carbon number of 6 to 10,
M is at least one selected from the group consisting of a calcium ion, a magnesium ion, an aluminum ion, a zinc ion, a bismuth ion, a manganese ion, a sodium ion, a potassium ion, and a cationized nitrogenous base, and
m is an integer of 1 to 3, n is an integer of 1 to 3, x is 1 or 2, and 2n = mx, wherein
relative to 100 parts by mass, in total, of the (a) component and the (b) component:

the (a) component is 50 parts by mass to 80 parts by mass;
the (b) component is 20 parts by mass to 50 parts by mass; and
the (c) component and the (d) component are 17 parts by mass to 40 parts by mass, in total,
a mass ratio (c)/(d) of the (c) component and the (d) component is 5/95 to 30/70,
the (a-1) polyphenylene ether resin is 40 mass% to 80 mass% and the (a-2) styrene resin is 20 mass% to 60 mass% in 100 mass% of the mixed resin of the (a-1) polyphenylene ether resin and the (a-2) styrene resin, and
a phase that contains the (a) component forms a continuous phase.

2. The resin composition according to claim 1, wherein the (a) component is not less than 55 parts by mass and less than 70 parts by mass and the (b) component is more than 30 parts by mass and not more than 45 parts by mass relative to 100 parts by mass, in total, of the (a) component and the (b) component.

3. The resin composition according to claim 1 or 2, wherein the (c) component and the (d) component are 21 parts by mass to 35 parts by mass, in total, relative to 100 parts by mass, in total, of the (a) component and the (b) component.

4. The resin composition according to any one of claims 1 to 3, further comprising less than 10 mass% of a polyolefin relative to 100 mass% of the resin composition.

5. The resin composition according to any one of claims 1 to 4, wherein the (c) component is a phosphoric acid ester compound represented by general formula (III), shown below, or general formula (IV), shown below,

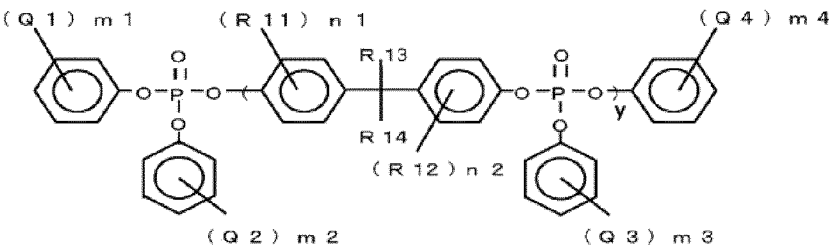

・・・(III)

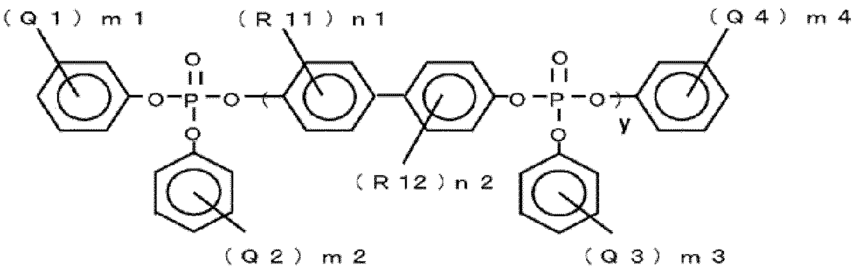

・・・(IV)

where, in general formulae (III) and (IV),

Q1, Q2, Q3, and Q4 are each, independently of one another, an alkyl group having a carbon number of 1 to 6, R11 and R12 are each a methyl group, and R13 and R14 are each, independently of one another, a hydrogen atom or a methyl group, and
y is an integer of 1 or more, n1 and n2 are each, independently of one another, an integer of 0 to 2, and m1, m2, m3, and m4 are each, independently of one another, an integer of 0 to 3.

6. A connecting structure for a photovoltaic module comprising the resin composition according to any one of claims 1 to 5.

7. The connecting structure for a photovoltaic module according to claim 6, wherein the connecting structure for a photovoltaic module is a junction box for a photovoltaic module.

## Patentansprüche

**1.** Harzzusammensetzung, umfassend:

(a) (a-1) ein Polyphenylenetherharz oder ein Mischharz aus (a-1) einem Polyphenylenetherharz und (a-2) einem Styrolharz;
(b) ein hydriertes Blockcopolymer;
(c) eine Phosphorsäureesterverbindung und
(d) mindestens eines, ausgewählt aus der Gruppe bestehend aus einem Phosphinsäuresalz der unten dargestellten allgemeinen Formel (I), einem Diphosphinsäuresalz der unten dargestellten allgemeinen Formel (II) und einem Kondensat davon,

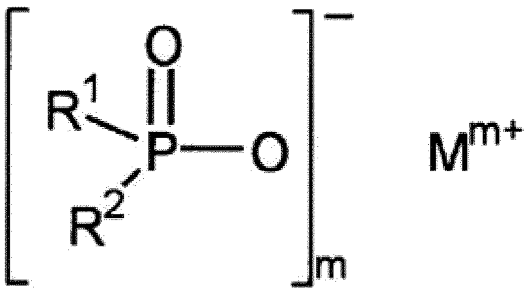

(I)

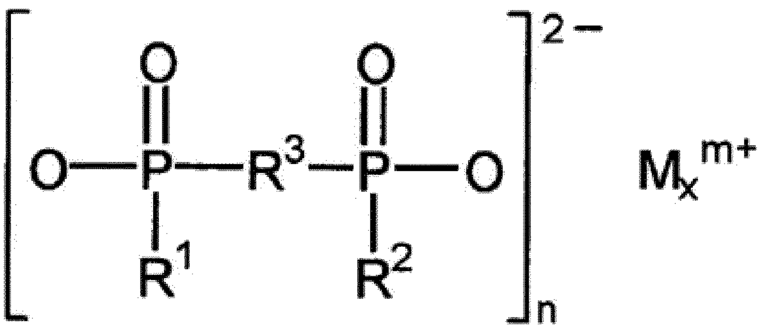

(II)

wobei in den allgemeinen Formeln (I) und (II),

$R^1$ und $R^2$ jeweils unabhängig voneinander eine lineare oder verzweigte Alkylgruppe mit einer Kohlenstoffzahl von 1 bis 6 oder eine Arylgruppe mit einer Kohlenstoffzahl von 6 bis 10 sind,
$R^3$ eines ist, ausgewählt aus der Gruppe bestehend aus einer linearen oder verzweigten Alkylengruppe mit einer Kohlenstoffzahl von 1 bis 10, einer Arylengruppe mit einer Kohlenstoffzahl von 6 bis 10, einer Alkylarylengruppe mit einer Kohlenstoffzahl von 6 bis 10 und einer Arylalkylengruppe mit einer Kohlenstoffzahl von 6 bis 10,
M mindestens eines ist, ausgewählt aus der Gruppe bestehend aus einem Calciumion, einem Magnesiumion, einem Aluminiumion, einem Zinkion, einem Wismution, einem Manganion, einem Natriumion, einem Kaliumion und einer kationisierten Stickstoffbase, und
m eine ganze Zahl von 1 bis 3 ist, n eine ganze Zahl von 1 bis 3 ist, x 1 oder 2 ist und 2n = mx, wobei bezogen auf insgesamt 100 Massenteile insgesamt der Komponente (a) und der Komponente (b):

die Komponente (a) 50 bis 80 Massenteile beträgt;
die Komponente (b) 20 bis 50 Massenteile beträgt; und
die Komponente (c) und die Komponente (d) insgesamt 17 bis 40 Massenteile betragen,
das Massenverhältnis (c)/(d) zwischen der Komponente (c) und der Komponente (d) von 5/95 bis 30/70 ist,
das (a-1) Polyphenylenetherharz 40 Massen-% bis 80 Massen-% und das (a-2) Styrolharz 20 Massen-% bis 60 Massen-% in 100 Massen-% des gemischten Harzes aus dem (a-1) Polyphenylenetherharz und dem (a-2) Styrolharz ausmacht, und
eine die Komponente (a) enthaltende Phase eine kontinuierliche Phase bildet.

2. Harzzusammensetzung nach Anspruch 1, wobei die Komponente (a) nicht weniger als 55 Massenteile und weniger als 70 Massenteile und die Komponente (b) mehr als 30 Massenteile und nicht mehr als 45 Massenteile, bezogen auf insgesamt 100 Massenteile der Komponente (a) und der Komponente (b), beträgt.

3. Harzzusammensetzung nach Anspruch 1 oder 2, wobei die Komponente (c) und die Komponente (d) insgesamt 21 Massenteile bis 35 Massenteile, bezogen auf insgesamt 100 Massenteile der Komponente (a) und der Komponente (b), betragen.

4. Harzzusammensetzung nach einem der Ansprüche 1 bis 3, welche weiterhin weniger als 10 Massen-% eines Polyolefins, bezogen auf 100 Massen-% der Harzzusammensetzung, enthält.

5. Harzzusammensetzung nach einem der Ansprüche 1 bis 4, wobei die Komponente (c) eine Phosphorsäureesterverbindung der unten dargestellten allgemeinen Formel (III) oder der unten dargestellten allgemeinen Formel (IV) ist,

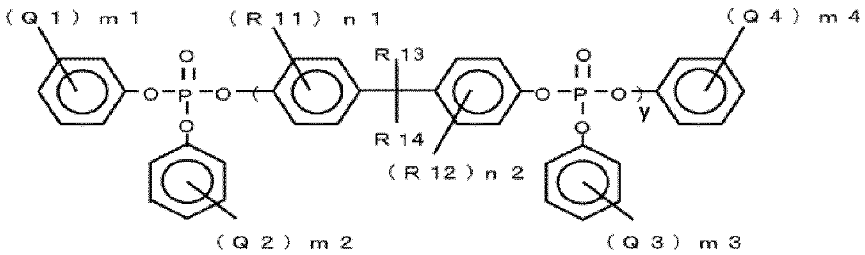

・・・(III)

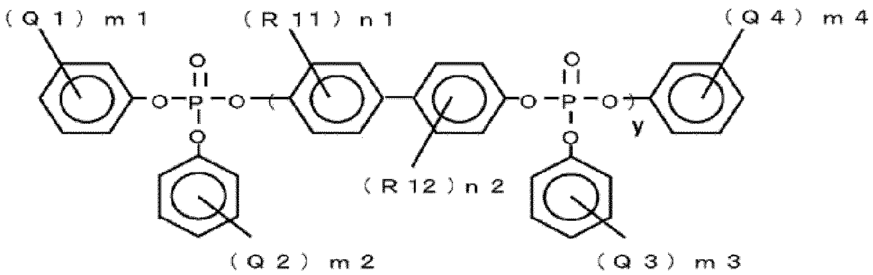

・・・(IV)

wobei in den allgemeinen Formeln (III) und (IV),

Q1, Q2, Q3 und Q4 jeweils unabhängig voneinander eine Alkylgruppe mit einer Kohlenstoffzahl von 1 bis 6 sind, R11 und R12 jeweils eine Methylgruppe sind, und R13 und R14 jeweils unabhängig voneinander ein Wasserstoffatom oder eine Methylgruppe sind, und
y eine ganze Zahl von 1 oder mehr ist, n1 und n2 jeweils unabhängig voneinander eine ganze Zahl von 0 bis 2 sind, und m1, m2, m3 und m4 jeweils unabhängig voneinander eine ganze Zahl von 0 bis 3 sind.

6. Verbindungsstruktur für ein Photovoltaik-Modul, umfassend die Harzzusammensetzung nach einem der Ansprüche 1 bis 5.

7. Verbindungsstruktur für ein Photovoltaik-Modul nach Anspruch 6, wobei die Verbindungsstruktur für ein Photovoltaik-Modul eine Anschlussdose für ein Photovoltaik-Modul ist.

**Revendications**

1. Composition de résine comprenant :

(a) (a-1) une résine d'éther de polyphénylène ou une résine mixte de (a-1) une résine d'éther de polyphénylène et (a-2) une résine de styrène ;
(b) un copolymère séquencé hydrogéné ;

(c) un composé ester d'acide phosphorique ; et

(d) au moins un choisi dans le groupe constitué d'un sel d'acide phosphinique représenté par la formule générale (I), montrée ci-dessous, d'un sel d'acide diphosphinique représenté par la formule générale (II), montrée ci-dessous, et d'un condensé de ceux-ci,

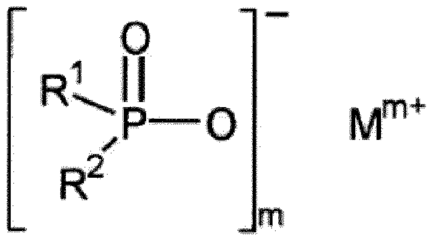

(I)

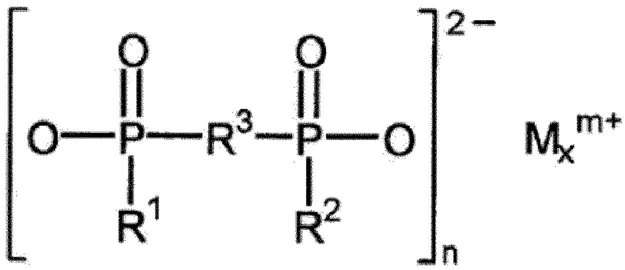

(II)

où, dans les formules générales (I) et (II),

$R^1$ et $R^2$ sont chacun, indépendamment l'un de l'autre, un groupe alkyle linéaire ou ramifié ayant un nombre de carbones de 1 à 6 ou un groupe aryle ayant un nombre de carbones de 6 à 10,

$R^3$ est un choisi dans le groupe constitué d'un groupe alkylène linéaire ou ramifié ayant un nombre de carbones de 1 à 10, d'un groupe arylène ayant un nombre de carbones de 6 à 10, d'un groupe alkylarylène ayant un nombre de carbones de 6 à 10, et d'un groupe arylalkylène ayant un nombre de carbones de 6 à 10,

M est au moins un choisi dans le groupe constitué d'un ion calcium, d'un ion magnésium, d'un ion aluminium, d'un ion zinc,

d'un ion bismuth, d'un ion manganèse, d'un ion sodium, d'un ion potassium, et d'une base azotée cationisée, et

m est un nombre entier de 1 à 3, n est un nombre entier de 1 à 3, x vaut 1 ou 2, et 2n = mx, dans laquelle

par rapport à 100 parties en masse, au total, du composant (a) et du composant (b) :

le composant (a) représente de 50 parties en masse à 80 parties en masse ;
le composant (b) représente de 20 parties en masse à 50 parties en masse ; et
le composant (c) et le composant (d) représentent 17 parties en masse à 40 parties en masse, au total,
un rapport massique (c)/(d) du composant (c) et du composant (d) est de 5/95 à 30/70,
la résine d'éther de polyphénylène (a-1) représente de 40 % en masse à 80 % en masse et la résine de styrène (a-2) représente de 20 % en masse à 60 % en masse dans 100 % en masse de la résine mixte de la résine d'éther de polyphénylène (a-1) et de la résine de styrène (a-2), et
une phase qui contient le composant (a) forme une phase continue.

2. Composition de résine selon la revendication 1, dans laquelle le composant (a) ne représente pas moins de 55 parties en masse et moins de 70 parties en masse et le composant (b) représente plus de 30 parties en masse et pas plus de 45 parties en masse par rapport à 100 parties en masse, au total, du composant (a) et du composant (b).

3. Composition de résine selon la revendication 1 ou 2, dans laquelle le composant (c) et le composant (d) représentent 21 parties en masse à 35 parties en masse, au total, par rapport à 100 parties en masse, au total, du composant (a) et du composant (b) .

4. Composition de résine selon l'une quelconque des revendications 1 à 3, comprenant en outre moins de 10 % en masse d'une polyoléfine par rapport à 100 % en masse de la composition de résine.

5. Composition de résine selon l'une quelconque des revendications 1 à 4, dans laquelle le composant (c) est un composé ester d'acide phosphorique représenté par la formule générale (III), montrée ci-dessous, ou la formule

générale (IV), montrée ci-dessous,

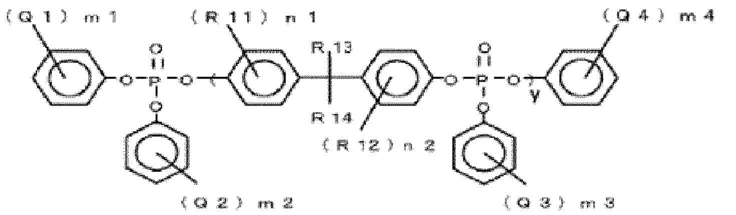

• • • (I I I)

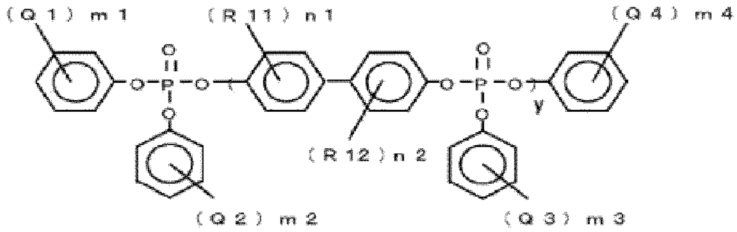

• • • (I V)

où, dans les formules générales (III) et (IV),
Q1, Q2, Q3 et Q4 sont chacun, indépendamment les uns des autres, un groupe alkyle ayant un nombre de carbones de 1 à 6, R11 et R12 sont chacun un groupe méthyle, et R13 et R14 sont chacun, indépendamment l'un de l'autre, un atome d'hydrogène ou un groupe méthyle, et
y est un nombre entier de 1 ou plus, n1 et n2 sont chacun, indépendamment l'un de l'autre, un nombre entier de 0 à 2, et m1, m2, m3 et m4 sont chacun, indépendamment les uns des autres, un nombre entier de 0 à 3.

6. Structure de liaison pour un module photovoltaïque comprenant la composition de résine selon l'une quelconque des revendications 1 à 5.

7. Structure de liaison pour un module photovoltaïque selon la revendication 6, dans laquelle la structure de liaison pour un module photovoltaïque est une boîte de jonction pour un module photovoltaïque.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6328664 B
- JP S5217880 B
- US 3306874 A
- US 3306875 A
- US 3257357 A
- US 3257358 A
- JP S5051197 A
- JP S63152628 A
- EP 699708 A
- JP H0873720 A